(19)

Europäisches
Patentamt
European
Patent Office
Office européen
des brevets

(11) **EP 2 166 451 A1**

(12) **EUROPEAN PATENT APPLICATION**

(43) Date of publication:
24.03.2010 Bulletin 2010/12

(51) Int Cl.:
*G06F 9/50* (2006.01)      *H04L 29/08* (2006.01)

(21) Application number: 08252968.6

(22) Date of filing: 08.09.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **BRITISH TELECOMMUNICATIONS public limited company**
**London**
**EC1A 7AJ (GB)**

(72) Inventor: **The designation of the inventor has not yet been filed**

(74) Representative: **Nash, Roger William et al**
**BT Group Legal**
**Intellectual Property Department**
**PP C5A, BT Centre**
**81 Newgate Street**
**London**
**EC1A 7AJ (GB)**

(54) **Distributed data processing system**

(57)    A distributed data processing system is disclosed. A problem with distributed data processing systems, especially data centres, is the low level of utilisation of those data centres. This is, in part, owing to data centre providers being concerned not to attract financial penalties levied by their customers in response to the quality of service provided to those customers by the data centre falling below service level agreed in service level agreements. Embodiments are disclosed which tackle this problem by having the data centre control the load placed upon it by carrying out an assessment of the likely impact of performing a requested bundle of jobs on jobs which are already running in the data centre. The decision whether to provide the requested bundle of jobs is then made by weighing-up the expected increase in penalties payable to customers against the revenue expected in return for running the request bundle of jobs.

```
        ┌──────────────────────────────┐  110
        >     Bundle Request Arrival     >
        └──────────────┬───────────────┘
                       ▼                    112
        ┌──────────────────────────────┐
        │ Calculate Predicted Server Allocation │
        └──────────────┬───────────────┘
                       ▼                    114
        ┌──────────────────────────────┐
        │ Calculate Predicted Revenue Change │
        └──────────────┬───────────────┘
                       ▼            116        118
                 ╱─────────────╲     N   ┌──────────────┐
                ╱ Admission Would ╲─────▶│ Send Bundle  │
                ╲ Boost Revenue?  ╱      │ Non-Admission│
                 ╲─────────────╱         │   Message    │
                       │ Y                └──────────────┘
                       ▼                    120
        ┌──────────────────────────────┐
        │      Re-allocate Servers       │
        └──────────────┬───────────────┘
                       ▼                    122
        ┌──────────────────────────────┐
        │       Generate Bundle ID       │
        └──────────────┬───────────────┘
                       ▼                    124
        ┌──────────────────────────────┐
        │       Store Bundle ID          │
        │    in Accepted Bundle List     │
        └──────────────┬───────────────┘
                       ▼                    126
        ┌──────────────────────────────┐
        │ Send Bundle Acceptance Message │
        └──────────────────────────────┘
```

**Figure 8**

EP 2 166 451 A1

**Description**

The present invention relates to a distributed data processing system, and to a method of operating a distributed data processing system.

Providers of data processing services often operate data centres which receive job requests from client computers via the World Wide Web and carry out some data processing in response to those requests, often returning the results of that processing to the requesting client computer.

Such data centres offer data processing services on behalf of many enterprises, such as retailers who use the data centre to offer an on-line shopping service to their customers in turn. The agreements between data centre operators and such enterprises often include expected service levels and provide for the data centre operator to pay a penalty to the enterprise in the event that the data centre fails to provide the agreed level of service.

This is a particular problem since the rate at which requests arrive from customers of an enterprise varies greatly and in an unpredictable way. The conventional solution to this problem is to over-engineer the data centre, which leads to the data centre being underused most of the time.

Numerous technical papers and patent applications have put forward complex proposals for solving this problem. The present inventors have seen a way in which a data centre operator can operate the data centre at relatively high utilisation levels whilst avoiding breaching the service levels data centre operators must offer to enterprises in order to win business.

According to the present invention, there is provided a computer network comprising a client computer, one or more server computers, and communication links connecting said client computer and server computers; said client computer being arranged in operation to:

    i) generate a job bundle request message representing a request for said one or more server computers to carry out a plurality of instances of a data processing job;
    ii) send said job bundle request message to said one or more server computers;

at least one of said server computers being arranged in operation to:

    i) receive said job bundle request message;

    ii) determine whether said one or more server computers is to provide said bundle of jobs;

    iii) indicate said determination to said client computer;

said client computer further being arranged in operation to:

    iv) on finding said indication to indicate that said bundle is accepted, send job requests belonging to said bundle to said one more server computers;

said one or more server computers being arranged in operation to receive job requests in said bundle and to perform the jobs requested therein.

By aggregating a plurality of requests to perform a data processing job, into a single request to perform a bundle of data processing jobs, and, responding to said single request by carrying out a bundle admission test, the computational load associated with admission control is reduced. The significant benefits of admission control are kept - namely the increased predictability in the load placed on the one or more server computers, and hence the ability to run the one or more server computers at a higher utilisation level without introducing an unacceptable risk of detrimentally affecting jobs which are already running.

It is to be noted that jobs are independent of one another - they are self-contained tasks - in other words the output of one data processing job is not used as the input to another.

Specific embodiments of the invention will now be described, by way of example only, with reference to the accompanying drawings in which:

    Figure 1 shows a computer network which is used in a first embodiment;

    Figure 2 shows a job type table stored by the controller computer for each job type;

    Figure 3 shows information included in a bundle request message sent from the enterprise network to the data centre;

    Figure 4 shows a subsequent job submission message sent from the enterprise network to the data centre;

    Figure 5 shows a job bundle summary table maintained by the controller computer for each admitted bundle;

    Figure 6 shows a bundle performance table maintained by the controller computer for each admitted bundle.

    Figure 7 is a diagram showing as a functional block diagram, the operation of the data centre;

    Figure 8 is a flow-chart illustrating the processing carried out by the data centre's controller computer, in a first embodiment, in response to the arrival of a bundle request message from the enterprise network;

Figure 9 is a flow-chart illustrating the processing carried out by the controller computer in response to receipt of a job submission message from the enterprise network;

Figure 10 is a flow-chart illustrating the processing carried out by the controller computer in response to receipt of a job completion message from the job handler; and

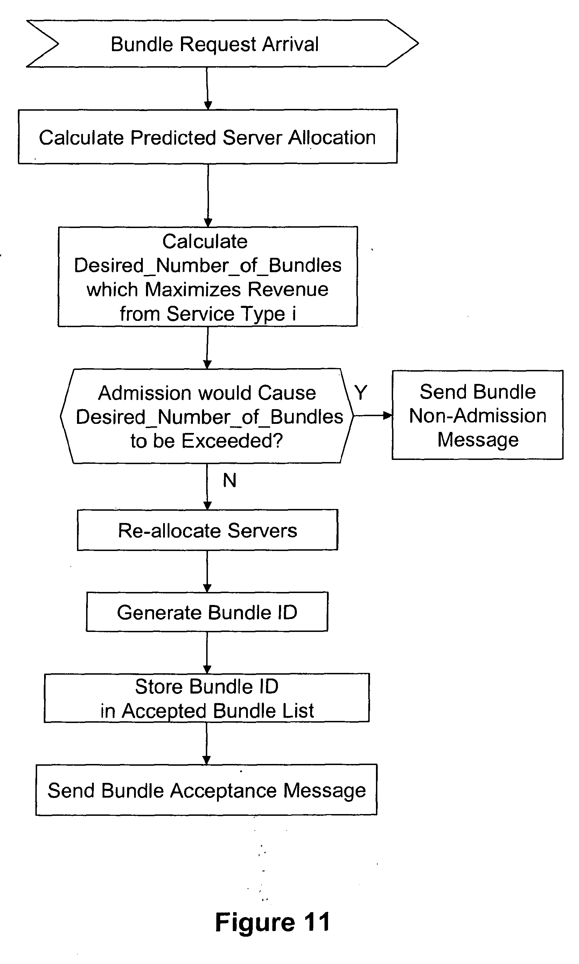

Figure 11 is a flow-chart illustrating the processing carried out by the data centre's controller computer, in a second embodiment, in response to the arrival of a bundle request message from the enterprise network.

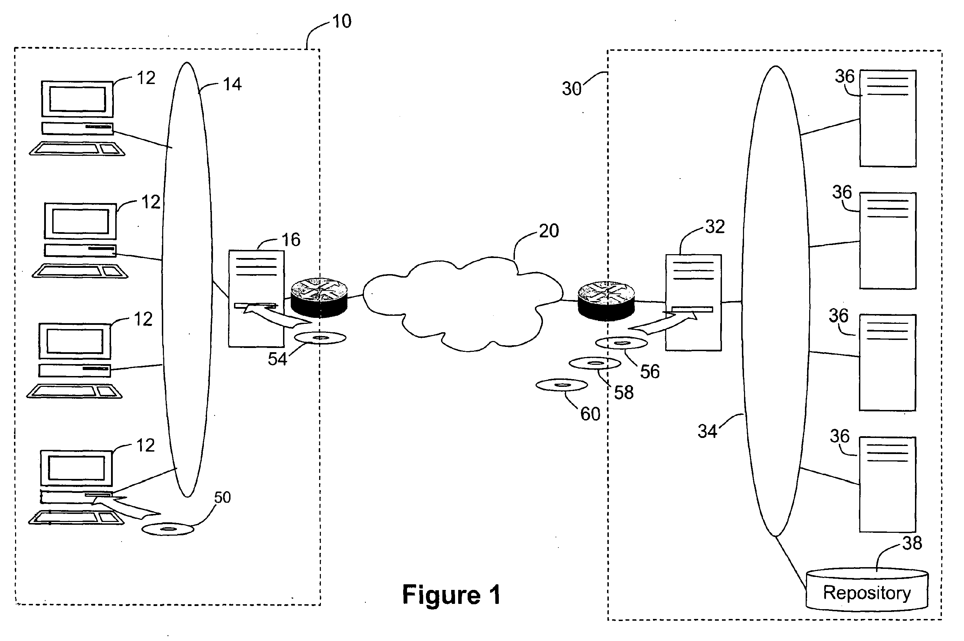

Figure 1 shows a computer network comprising an enterprise network 10 connected via the Internet 20 to a data centre 30.

The enterprise network 10 comprises a large number of personal computers 12 (only four are shown) connected via a local area network 14 to a proxy computer 16. Each personal computer includes conventional hardware - especially a hard disk for the storage of programs, a processor whose actions are controlled by such programs, a random access memory from which the processor fetches programs controlling its actions, a display and display card for controlling the display, a network interface card which enables the computer to send messages to, and receive messages from a network, and one or more communication busses which provide for electronic digital communication between the various pieces of hardware mentioned. Also present on the hard disk is an operating system program and other utility programs.

For the purposes of this illustrative example embodiment, it is assumed that the enterprise owning enterprise network 10 is a retail telecommunication service company which provides its retail customers with telecommunication services on credit. As such, the company carries out a credit check on prospective customers prior to offering those customers telecommunications services.

Thus, each of the personal computers is provided with a credit check client program installed onto the computer's hard disk from CD-ROM or DVD-ROM 50. The credit check client program is executable to extract details of a potential customer from a customer service agent via a graphical user interface provided using the computer's display, and to forward those details in a message to proxy computer 16.

The proxy computer also has conventional hardware and software. In addition, a credit check proxy program is installed onto the computer's hard disk from CD-ROM or DVD-ROM 54. The credit check proxy program controls the proxy computer 16 to receive credit check requests from the personal computers 12 and to forward them across the Internet 20 to the data centre 30. On receiving a response to a credit check, the proxy computer 16 passes the response to whichever personal computer 12 issued the corresponding credit check request. Under control of the program, the proxy computer also keeps a record of the number of credit check requests the enterprise makes in each hour of the day. It thereby calculates and stores estimates of the number of credit checks likely in each hour of the day. Every hour, the proxy computer 16, under control of the credit check proxy program, makes a request to submit an estimated number of credit checks to the data centre 30. Provided that request is accepted, the proxy computer 16 then forwards the credit checks it receives over the following hour to the data centre 30.

The data centre 30 comprises a large number of server computers 36 connected via a local area network 34 to a controller computer 32. Also connected to the local area network is a large persistent memory, said as a RAID array 38. Those skilled in the art will be aware that the server computers 36 will normally take the form of blades or boards inserted into racks providing the server computers with shared storage and power facilities. Each of the server computers includes one or more processors whose actions are controlled by programs (often loaded from repository 38), a random access memory from which the processor fetches programs controlling its actions, a network interface card which enables the computer to send messages to, and receive messages from a network, and one or more communication busses which provide for electronic digital communication between the various pieces of hardware mentioned.

The server computers are able to perform a plurality of different job types. Suitable application programs are loaded from CD-ROM or DVD-ROM 56 onto the controller computer 32 which then stores those programs in repository 38. Also loaded onto controller computer 32 (from CD-ROM or DVD-ROM 58) is data centre management software which enables a data centre administrator to manage which application programs are available on which servers. In the present example, the server computers 36 data centre management software automatically arranges the server computers 36 into pools - each server in any given pool running an application program to provide a given job type. The data centre management software provides an interface which enables other programs to re-allocate the server computers 36 to different pools.

Also loaded onto controller computer 32 (from CD-ROM or DVD-ROM 60) is a job bundle management program which responds to requests to run bundles of jobs and thereafter monitors and records the performance of the data centre in running any accepted bundle of jobs.

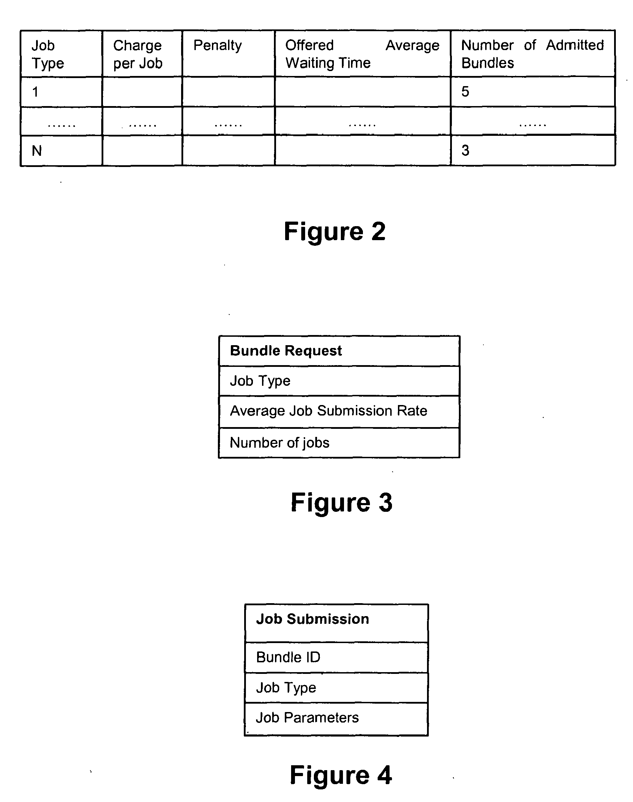

The data centre provides a number of different applications to enterprise network. Each application provides a job type. Figure 2 shows a job type table having N rows corresponding to the N job types offered by the data centre. The leftmost column of the table is a job type identifier. The job type on which this example concentrates, credit checks is job type 1. There are of course a huge number of possible job types, other possibilities include, for example, directory enquires services, postcode / address services or currency conversion services.

For each of the offered job types listed in the table, the data centre offers a service level agreement. Whilst the service level agreements currently used in practice are primarily concerned with the availability of the service (i.e. the job type), in the present example, the performance of the data centre in carrying out jobs of each type is monitored and forms part of the service level agreement. A performance parameter which is monitored by the controller computer 32 for each submitted job is the waiting time between the controller computer 32 receiving a job submission message and one of the server computers 36 starting to carry out that job. As will be explained in more detail below, in the present example, the enterprise network 10 bundles a plurality of job requests in a bundled request. The performance parameter used in the present example is correspondingly the average of the waiting times of all the jobs included in the bundle. A threshold level of the performance parameter which is not to be breached is offered by the data centre 30 and forms part of the service level agreement between the data centre 30 and its customers. Thus, in the present example, an average waiting time which should not be exceeded is recorded in the fourth column of the table. As part of the service level agreement, the data centre 30 agrees to offer a sum of money (a penalty) to a customer who submits a bundle of requests for a given type of job, and subsequently finds that the average waiting time exceeds the level recorded in the fourth column of the table. The amount of that penalty is stored in the third column of the table. A charge payable by the customer for each job of each job type carried out is recorded in the second column of the table.

Also recorded in the job type table is a count of the number of bundles of each job type admitted at any given time (fifth column). The purpose of that count will be explained in more detail below.

Figure 3 shows a bundle request message sent by proxy computer 16 in enterprise network 10 to controller computer 32 in data centre 30. The bundle request specifies the type of job that will constitute the bundle (first row), the number of instances of jobs of that type which are to be included in the bundle (third row), and the average rate at which the enterprise network estimates the job submissions within the bundle will arrive at the data centre 30.

Figure 4 shows the format of a job submission message sent by the proxy computer 16 for each job in an admitted bundle of jobs. The job submission message includes a bundle identifier assigned to the bundle by the controller computer 32 (first row), an indication of the job type (second row) and the parameters which the relevant application program running at the data centre 30 requires in order to carry out the job (for example, in the credit check application, the job parameters might be the individuals full name and address).

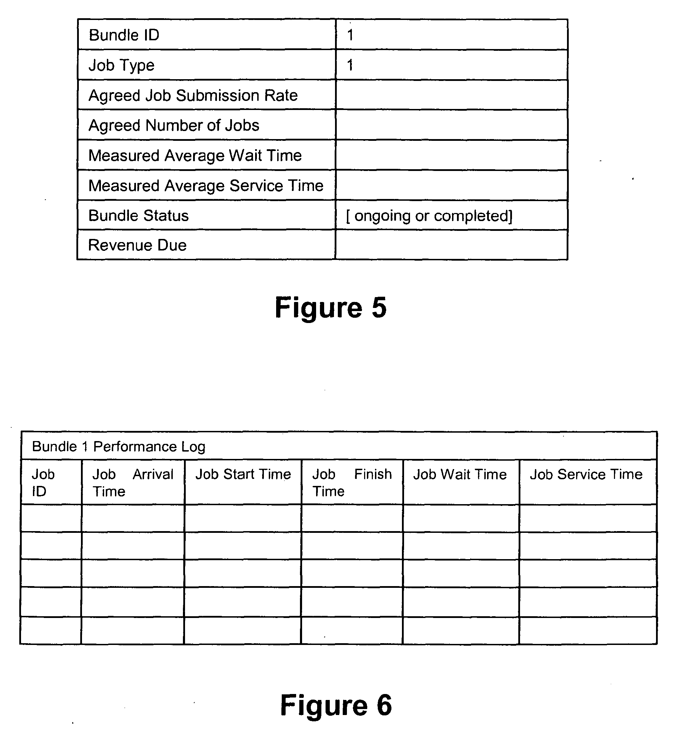

Figure 5 shows a job bundle table maintained by the controller computer 32 for each bundle admitted by the controller computer 32. Each bundle table includes a unique bundle identifier (first row), the type of job in the bundle (second row), the job submission rate for the bundle (third row - this will match the figure in the second row of the Bundle Request (Figure 3)), the number of jobs in the bundle (fourth row - this will match the figure in the third row of the Bundle Request), the measured average wait time for this bundle (fifth row), the measured average service time for this bundle (sixth row), the bundle status - i.e. whether the bundle is currently being processed or whether all the jobs within the bundle have now been processed - (seventh row) and the actual revenue (eighth row) which the enterprise network owes the data centre 30 for performing this bundle of jobs.

Figure 6 shows a bundle performance log which the controller computer maintains for each admitted bundle. Entries in each record in that table include a Job ID, a job arrival time (arrival at the controller computer 32), a job start time and job finish time (each reported to controller computer 32 by a server 36), a job wait time (the delay from the job arrival time to the job start time), and a job service time (the difference between the job finish time and the job start time).

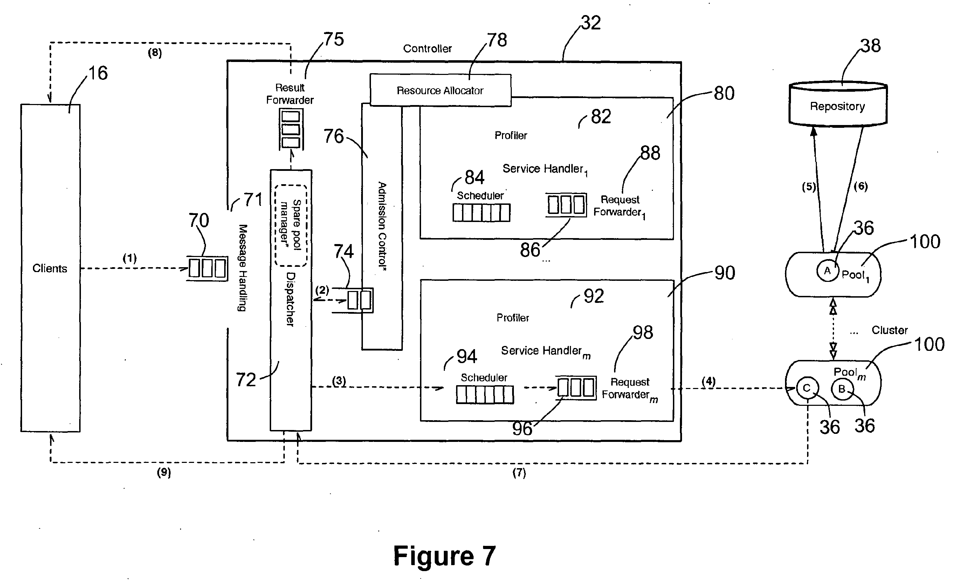

Figure 7 shows the computer network of Figure 1, but sets out the functional components of software running on that computer network. Bundle Requests (Figure 3) and Job Submissions (Figure 4) are received in an input queue 70 from which they are dequeued and handled by message handling component 71. The incoming messages are passed to a dispatcher 72 which forwards bundle requests (Figure 2) into a second queue 74 which feeds an admission control module 76. The servers 36 are organised into pools 100, each of which is dedicated to running a particular type of job (in the example shown in Figure 7, pool 100 is dedicated to running jobs of type 1, and pool 102 is dedicated to running jobs of type m). The dispatcher 72 forwards incoming job submissions (Figure 4) to a job handler 80,90 which is dedicated to handling job submissions of a particular type. Each job handler includes a scheduler 84,94 which presents the incoming job submissions to a third queue 86,96 in a predetermined order. In the present example, the scheduler simply forwards the job submissions (Figure 4) in the same order in which they arrive from the dispatcher 72. The dispatcher 72 is also responsible for forwarding the results of running jobs back to the proxy computer 16.

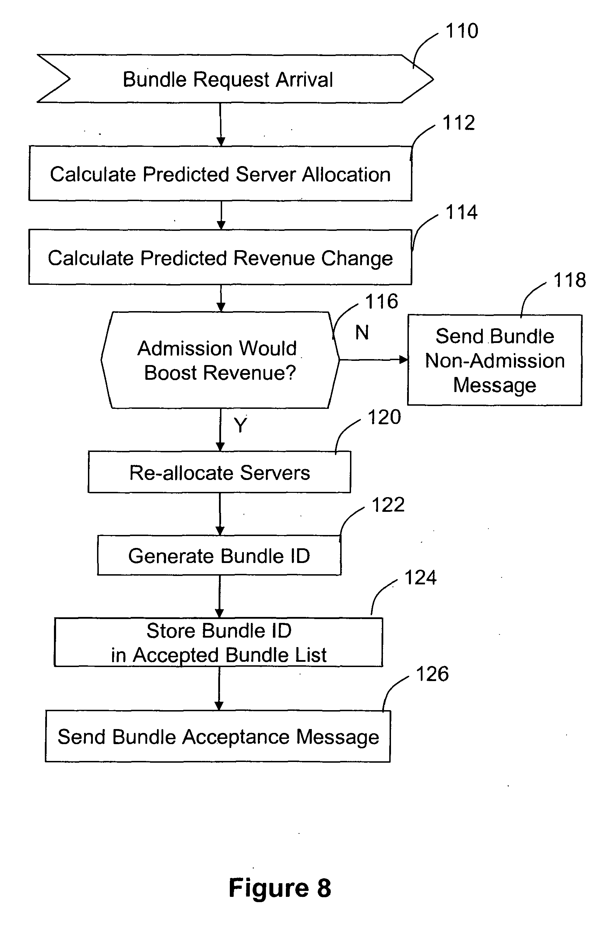

The processing carried out by the admission control 76 and resource allocation 78 modules on dequeuing a bundle request (Figure 3) from the queue 74 will now be described with reference to Figure 8.

On a bundle request message (Figure 3) being taken (step 110) from the queue 74, the resource allocator 78 calculates (step 112) how the servers 36 would be allocated to the pools 100, 102 dedicated to the different job types, given the bundle request to be accepted by the data centre 30.

The putative allocation is calculated in proportion to the offered load of each job type weighted by a factor representing the economic importance of that job type. The offered load of each ongoing bundle can be calculated by multiplying the arrival rate of jobs in the bundle (Figure 5, third row) by the measured average service time for the bundle (Figure 5, sixth row). The offered load for a job type can then be found by adding the offered load of each ongoing bundle of jobs of that type. The weighting factor might, for example, be calculated by dividing the penalty for breaching the service level for that job type (Figure 2, third column) by the charge per job of that job type (Figure 2, second column).

The putative server allocation is then used in calculating the likely average waiting time ( $\beta_i$ ) for jobs of each type. Those skilled in the art will be able to provide methods for calculating an estimate of the likely average waiting time from the information found in the job bundle summary tables (Figure 5) and job performance logs (Figure 6). Having calculated an estimate of the likely average waiting time for each job type, the probability of the average waiting time exceeding the offered service level for each job type can be calculated using the expression

$$P(Wi > x) = 1 - \Phi(x - \beta_i / \sqrt{(\beta_i / k_i)})$$

where $k_i$ is the number of jobs in each bundle and $\phi(.)$ is the cumulative distribution function of the standard normal distribution (mean 0, variance 1).

Using the calculated probability of the waiting time for a given job type exceeding the offered waiting time for that job type, the expected change in revenue for the data centre is calculated (step 114) by offsetting the revenue from charging for the jobs in the bundle against the increase in the probability of the data centre 30 having to pay a penalty for breaching service levels in relation to each job type in the system.

A test is then carried out (step 116) to find whether the change in revenue is positive. If it is not, then the bundle request is refused, the admission control then sending a bundle non-admission message via the dispatcher 72 and queue 73 to the proxy computer 16. The proxy computer 16 might then report this to its administrator who might retry the same request later on, or pass the request to another data centre.

If test (step 116) finds that the change in revenue is positive, then the data centre management software installed from CD-ROM or DVD-ROM 58 (Figure 1) is used to re-allocate (step 120) the servers between the various job types as earlier calculated (in step 112) using the above-described economically-weighted offered load allocation. In the present examples, jobs already running on a server 36 are allowed to finish before re-allocation takes place.

A unique bundle ID is then generated (step 122) by the controller computer 32. The bundle ID is then added (step 124) to a list of accepted bundle IDs. Finally, an HTTP cookie is then set (step 126) on the proxy computer 16, that cookie including the bundle ID.

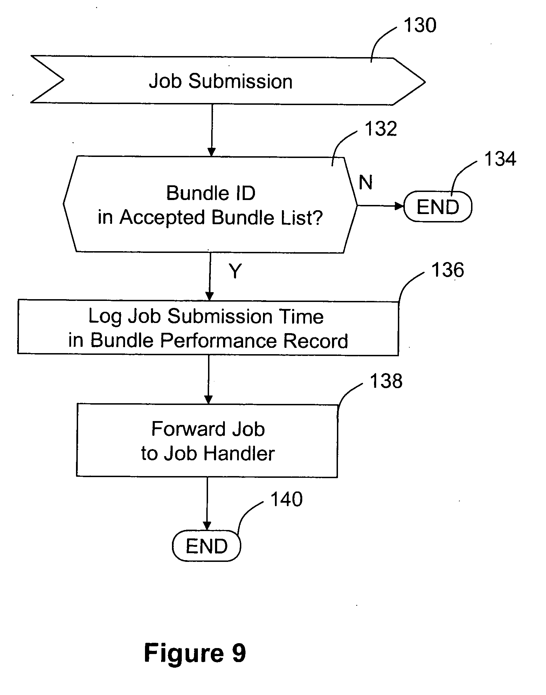

The operation of the controller computer 32 on receiving a job submission message (Figure 4) is illustrated in Figure 9. On receiving (step 130) the job submission message, the dispatcher checks (step 132) whether the bundle ID included in the message is included in the accepted bundle list. If the bundle ID is not included in that list, then the processing ends (step 134).

If, on the other hand, the bundle ID is found in the accepted bundle list, then the job submission time is logged (step 136) in the bundle's performance log (Figure 6). The job submission message is then passed to the relevant job handler 80, 90 where it is placed into the job queue 86,96 and forwarded (step 138) to the relevant server pool 100, 102 when it reaches the front of that queue. Thereafter, the process ends (step 140).

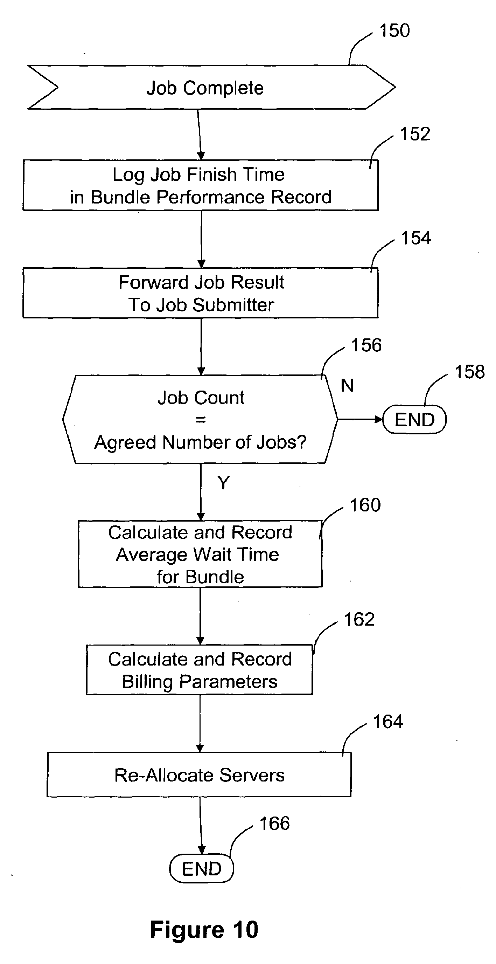

Figure 10 illustrates the processing which takes place on the controller computer 32 receiving (step 150) a job completion message from a server 36.

Firstly, the controller computer 32 records the job completion time in the bundle performance log (Figure 6). Thereafter, the job results are passed to the dispatcher 72 which forwards (step 154) the job results to the proxy computer 16 via queue 73.

Next, a bundle completion test (step 156) is carried out by finding whether the job count for this bundle now equals the number of jobs specified in the original bundle request message (Figure 3). If more jobs from the bundle remain, then processing ends (step 158).

If, on the other hand, the bundle of jobs is now complete, then the average waiting time for jobs in the bundle is calculated and recorded (step 160) in the job bundle summary table (Figure 5). Thereafter, the revenue owed to the data centre is calculated (step 162) by multiplying the number of jobs in the bundle by the charge per job (Figure 2, second column) and subtracting the penalty if the average waiting time for the bundle (found in step 160) exceeds the offered service level (Figure 2, fourth column).

The bundle is then marked as completed, and the server allocation module is called to re-allocate (step 164) the servers between job types.

In alternative embodiments, the following variations might be made to the above-described embodiments:

    i) rather than having the server computer generate a unique bundle identifier, the client computer could generate a unique bundle identifier and include it in the service bundle request. For example the bundle identifier might be the client computer's MAC address concatenated with a bundle request number which the client increments from one bundle request to the next (this number might loop round back to 1 after a predetermined number of bundle requests). Alternatively, the client computer could be constrained (by code and/or by commercial agreement) to follow a bundle requests with an uninterrupted stream of all the individual service requests to be included in the bundle. The network address - e.g. the IP address included in the bundle request message - would then serve to identify a subsequent service request as belonging to that particular bundle.

ii) whilst in the above embodiment, each service request was checked to find whether it belonged to an admitted bundle, in other embodiments the client computers could be constrained (by code and/or by commercial agreement) not to send service requests unless they had earlier received an indication that the service bundle to which the service request belongs had been earlier admitted.

iii) In the above embodiment, the service involved the server computers retrieving data from a variety of sources, carrying out some processing on that data, and sending the result of that processing to the client. However, the service could, for example, be one that involves the carrying out of some processing and the sending of a response (e.g. an address-to-postcode conversion service), or it could simply involve the storing of data (e.g. a digital file storage facility).

iv) in the above embodiment, one Service Level Agreement was stored by the front-end server for each type of job. In other embodiments, the Service Level Agreement might vary between different bundles of the same type of job.

v) whilst, in the above embodiment, each bundle declared its job arrival rate and number of jobs as part of the bundle request, those figures could then be fixed for a given type of job.

vi) whilst in the above example, the enterprise customer of the data centre had a number of personal computers, all of which communicated with the data centre via proxy computer 16, it is to be understood that it might simply only be computers belonging to customers of the enterprise which communicate via the Internet with the data centre 30 in order to obtain the services of the enterprise. This would, for example, be the situation where the service offered by the data centre was an online retailing web-site.

vii) whilst the above example described a data centre as providing the data processing services, other forms of service provisioning systems could be used instead. For example, a group of different users' personal computers could offer their data processing power to others.

viii) the above embodiment did not support the provision of different classes of service of a given job type. This could be achieved in other embodiments by amending the bundle request message (Figure 3) to include a Class of Service Indication - e.g. 'Gold', 'Silver' or 'Bronze'. The job type table could then include different average waiting time values - and possibly different charges and penalties - for the different classes of service.

ix) in the above embodiment, the server computer indicated to the client computer that the bundle was accepted by sending a bundle request message. However, the acceptance could instead be indicated by not sending a message indicating that the request to carry out a bundle of jobs is not accepted.

In summary of the above, a distributed data processing system is disclosed. A problem with distributed data processing systems, especially data centres, is the low level of utilisation of those data centres. This is, in part, owing to data centre providers being concerned not to attract financial penalties levied by their customers in response to the quality of service provided to those customers by the data centre falling below service level agreed in service level agreements. Embodiments are disclosed which tackle this problem by having the data centre control the load placed upon it by carrying out an assessment of the likely impact of performing a requested bundle of jobs on jobs which are already running in the data centre. The decision whether to provide the requested bundle of jobs is then made by weighing-up the expected increase in penalties payable to customers against the revenue expected in return for running the request bundle of jobs.

## Claims

1. A computer network comprising a client computer, one or more server computers, and communication links connecting said client computer and server computers;
said client computer being arranged in operation to:

    i) generate a job bundle request message representing a request for said one or more server computers to carry out a plurality of instances of a data processing job;
    ii) send said job bundle request message to said one or more server computers;

    at least one of said server computers being arranged in operation to:

i) receive said job bundle request message;
ii) determine whether said one or more server computers is to provide said bundle of jobs;
iii) indicate said determination to said client computer;

said client computer further being arranged in operation to:

iv) on finding said indication to indicate that said bundle is accepted, send job requests belonging to said bundle to said one more server computers;

said one or more server computers being arranged in operation to receive job requests in said bundle and to perform the jobs requested therein.

2.  A computer network according to claim 1 wherein said job bundle request message includes the predicted average inter-arrival time between jobs in said bundle.

3.  A computer network according to claim 1 wherein said one or more server computers are further arranged in operation to monitor the current average inter-arrival time of jobs of a given type and the current average service time of jobs of a given type and to derive therefrom an estimate of the current load offered on the one or more server computers by jobs of said given type.

4.  A computer network according to claim 3 wherein said one or more server computers is further arranged in operation to calculate the probability that said requested bundle of jobs will be performed with a quality worse than a threshold performance level in determining whether to perform said requested bundle of jobs.

5.  A computer network according to claim 4 wherein said one or more server computers are further arranged in operation to monitor the variation in inter-arrival time of jobs of a given type and the variation in the service time of jobs of a given type, said variations also being taken into account in calculating the probability that said requested bundle of jobs will be performed with a quality worse than a threshold performance level.

6.  A computer network according to claim 1 wherein said one or more server computers perform a plurality of different job types, and said determination involves calculating an allocation of server computers to job types assuming that the requested bundle is admitted, and thereafter calculating the probability that the requested bundle of jobs will be performed with a quality worse than a threshold performance level.

7.  A computer network according to claims 4 or 5 wherein said one or more server computers store a financial penalty associated with performing a requested bundle of jobs with a quality worse than a threshold performance level, and a financial reward associated with performing a requested bundle of jobs with a quality better than said threshold performance level, said one or more server computers determining whether to perform said bundle of jobs in dependence on the expected revenue from said bundle given said stored penalty and reward and the probability of said quality exceeding said threshold and/or the probability of said quality falling below said threshold.

8.  A computer network according to claim 6 wherein said one or more server computers store, for each type of job, a threshold performance level, a financial penalty associated with performing a requested bundle of jobs with a quality worse than said threshold performance level, and a financial reward associated with performing a requested bundle of jobs with a quality better than said threshold performance level, said one or more server computers determining whether to perform said bundle of jobs in dependence on the expected revenue from said bundle given said stored penalty and reward and the probability of said quality exceeding said threshold and/or the probability of said quality falling below said threshold, and on the expected revenue from bundles of jobs which said one or more server computers have already started performing.

9.  A computer network according to claim 1 wherein said one or more server computers are arranged in operation to respond to said job request by finding whether said job request belongs to an admitted job bundle, and to meet said job request on finding that said service request does belong to an admitted bundle.

10. A computer network according to claim 1 wherein said one or more server computers indicate the result of said determination by:

a) generating a bundle admission indication message indicating whether said one or more server computers is to provide said bundle of job; and
iv) sending said job bundle admission message to the sender of said service bundle request message;

said client computer learning said determination by reading said bundle admission message.

**11.** A computer network according to claim 10 wherein said bundle admission indication message includes a job bundle identifier.

**12.** A data processing system arranged in operation to:

i) receive a job bundle request message representing a request for said data processing system to carry out a plurality of instances of a data processing service;
ii) determine whether said one or more server computers is to provide said bundle of jobs; and
iii) indicate the result of said determination to the sender of said job bundle request message.

**13.** A method of operating a data processing system comprising:

i) receiving a job bundle request message representing a request for said data processing system to carry out a plurality of instances of a data processing service;
ii) determining whether said one or more server computers is to provide said bundle of jobs; and
iii) indicating the result of said determination to the sender of said job bundle request message.

**14.** A computer program executable to perform the method of claim 13.

**15.** A computer-readable medium with the computer program of claim 14 stored thereon.

**Figure 1**

9

| Job Type | Charge per Job | Penalty | Offered Average Waiting Time | Number of Admitted Bundles |
|----------|----------------|---------|------------------------------|----------------------------|
| 1 | | | | 5 |
| ...... | ...... | ...... | ...... | ...... |
| N | | | | 3 |

# Figure 2

| Bundle Request |
|----------------|
| Job Type |
| Average Job Submission Rate |
| Number of jobs |

# Figure 3

| Job Submission |
|----------------|
| Bundle ID |
| Job Type |
| Job Parameters |

# Figure 4

| Bundle ID | 1 |
|---|---|
| Job Type | 1 |
| Agreed Job Submission Rate | |
| Agreed Number of Jobs | |
| Measured Average Wait Time | |
| Measured Average Service Time | |
| Bundle Status | [ ongoing or completed] |
| Revenue Due | |

# Figure 5

| Bundle 1 Performance Log | | | | | |
|---|---|---|---|---|---|
| Job ID | Job Arrival Time | Job Start Time | Job Finish Time | Job Wait Time | Job Service Time |
| | | | | | |
| | | | | | |
| | | | | | |
| | | | | | |
| | | | | | |

# Figure 6

Figure 7

110

> Bundle Request Arrival >

112

Calculate Predicted Server Allocation

114

Calculate Predicted Revenue Change

116

Admission Would Boost Revenue?

118

N → Send Bundle Non-Admission Message

Y

120

Re-allocate Servers

122

Generate Bundle ID

124

Store Bundle ID in Accepted Bundle List

126

Send Bundle Acceptance Message

**Figure 8**

130

Job Submission

132

Bundle ID
in Accepted Bundle List?  →N→ END  134

Y

Log Job Submission Time
in Bundle Performance Record  136

Forward Job
to Job Handler  138

END  140

**Figure 9**

150

```
        Job Complete
```

152

```
    Log Job Finish Time
in Bundle Performance Record
```

154

```
    Forward Job Result
     To Job Submitter
```

156

```
      Job Count
          =
Agreed Number of Jobs?
```

N → END 158

Y

160

```
Calculate and Record
   Average Wait Time
     for Bundle
```

162

```
Calculate and Record
  Billing Parameters
```

164

```
   Re-Allocate Servers
```

166

END

**Figure 10**

Bundle Request Arrival

Calculate Predicted Server Allocation

Calculate
Desired_Number_of_Bundles
which Maximizes Revenue
from Service Type i

Admission would Cause
Desired_Number_of_Bundles
to be Exceeded? — Y → Send Bundle
Non-Admission
Message

N

Re-allocate Servers

Generate Bundle ID

Store Bundle ID
in Accepted Bundle List

Send Bundle Acceptance Message

## Figure 11

**EP 2 166 451 A1**

EUROPEAN SEARCH REPORT

Application Number

EP 08 25 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C MUSCIANO, B KENNEDY: "HTML The Definitive Guide" August 1998 (1998-08), O'REILLY , SEBASTOPOL, CALIF., USA , XP002508958 | 1,2,10, 12-15 | INV. G06F9/50 H04L29/08 |
| Y | Section 1.2.2 The Flow of Information * page 6 - page 7 * * page 129, last paragraph * Section 5.2.6.1 The src attribute * page 133 * ----- | 3-9,11 | |
| Y | US 6 748 414 B1 (BOURNAS REDHA M [US]) 8 June 2004 (2004-06-08) * abstract; figure 4 * * column 6, line 9 - line 28; figure 6 * ----- | 3 | |
| Y | EP 1 612 674 A (TNO [NL]) 4 January 2006 (2006-01-04) * abstract * * paragraph [0001] * * paragraph [0006] - paragraph [0008] * * paragraph [0021] * * paragraph [0029] - paragraph [0032] * * tables 1-3 * * page 7, line 16 - line 25 * * table 6 * ----- | 3-9,11 | |
| A | EP 1 613 109 A (HUAWEI TECH CO LTD [CN]) 4 January 2006 (2006-01-04) * paragraph [0021] * * paragraph [0025] - paragraph [0030]; figure 2 * ----- | 1 | |

TECHNICAL FIELDS SEARCHED (IPC)

G06F
H04L

The present search report has been drawn up for all claims

| Place of search | Date of completion of the search | Examiner |
|---|---|---|
| Munich | 8 January 2009 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

**ANNEX TO THE EUROPEAN SEARCH REPORT
ON EUROPEAN PATENT APPLICATION NO.**

EP 08 25 2968

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2009

| Patent document cited in search report | | | Publication date | Patent family member(s) | | Publication date |
|---|---|---|---|---|---|---|
| US 6748414 | B1 | | 08-06-2004 | NONE | | |
| EP 1612674 | A | | 04-01-2006 | NONE | | |
| EP 1613109 | A | | 04-01-2006 | CA 2521295 A1 | | 21-10-2004 |
| | | | | CN 1536901 A | | 13-10-2004 |
| | | | | WO 2004091235 A1 | | 21-10-2004 |
| | | | | JP 2006522509 T | | 28-09-2006 |
| | | | | RU 2313921 C2 | | 27-12-2007 |
| | | | | US 2006094446 A1 | | 04-05-2006 |

EPO FORM P0459

For more details about this annex : see Official Journal of the European Patent Office, No. 12/82